# EUROPEAN PATENT APPLICATION

(11) **EP 1 435 728 A2**
(43) Date of publication of application: **07.07.2004**
(21) Application number: 03104757.4
(22) Date of filing: 17.12.2003
(51) Int. Cl.: H04N 1/405

(54) **Halftone method and system using hybrid AM/FM screening for highlight/shadow tonal regions.**

(30) Priority: 06.01.2003 US 337031
(71) Applicant: Agfa Corporation, Ridgefield Park, NJ 07660-2199 (US)
(72) Inventor: Crounse, Kenneth, 02143 Sommerville (US)
(74) Representative: Van Ostaeyen, Marc Albert Jozef

(57) **Abstract**

A threshold mask for converting a contone image to a halftone image defines halftone cells that define halftone dots that undergo a growth in population as tone levels increase. After some growth in population, the halftone cells define halftone dots that then grow in size from a first predetermined size as tone levels increase further. During the growth in population, the halftone dots having a second predetermined size are placed into halftone gaps. The second predetermined size is smaller than the first predetermined size. In the simplest implementation, FM screening is used up to a tone level where the FM dither pattern holes begin to become visible. At this point AM screening is applied only to the remaining dot centers (corresponding to those holes) until they reach the stable dot size. Then, the dots are further grown according to the method used outside of the FM regime (e.g. the conventional AM process). In the FM regime, two types of visual disturbances can arise. The "FM regime" is the range of tones for which some form of FM screening is being used, and applies to all tones lighter than the one in which all halftone dot centers have, at minimum, achieved the stable halftone dot. In this regime, disturbances can arise due to:
1) variations in printed halftone dots smaller than the minimum stable size; and
2) unpleasant patterns produced by the dithered stable dots. The present invention allows for the creation of a screen with the best trade-off between these disturbances at tone levels in the FM regime.

## Description

### FIELD OF THE INVENTION

The present invention relates to a threshold mask for converting a contone image into a halftone image and a method for converting a contone image into a halftone image using a threshold mask, specifically a system using hybrid AM/FM screening for highlight/shadow tonal regions.

### BACKGROUND OF THE INVENTION

Images are typically recorded and stored as contone images in which each image element or pixel has a color tone value. For example, consider a digitally stored black and white image--each image element will have a corresponding value setting its tone, among 256 gradations, for example, between white and black. Color images may have three or more tone values for each of the primary colors.

Many printing processes, however, cannot render an arbitrary color tone value at each addressable location or pixel. Flexographic, xerographic, inkjet, and offset printing processes are basically binary procedures in which color or no color is printed at each pixel. For example, at each addressable point on a piece of paper, a laser printer can generally either lay down a dot of black or colored toner, or combination thereof, or leave the spot blank, *i.e.*, white. However, some newer devices have a limited ability to deposit intermediate quantities of toner.

Digital halftoning involves conversion of the contone image to a binary, or halftone, representation. Color tone values of the contone image elements become binary dot patterns that, when averaged, appear to the observer as the desired color tone value. The greater the coverage provided by the dot pattern, the darker the color tone value.

A number of techniques exist for determining how to arrange the halftone dots in the process of transforming the contone image into a halftone image. The two most common techniques are error diffusion and threshold masks. Generally, error diffusion has certain performance advantages, but is relatively computationally intensive. In error diffusion halftoning, a decision whether to print a dot of ink or toner is made at each pixel of a screen based on the value of the underlying contone image elements. An error necessarily results, because of the inability of the printing process to render any, or a limited number of, intermediate tones. This error is carried over into the decision process of an adjacent pixel. The error generated here is used in another pixel decision process, and so on. In short, the printer decides whether or not to print a dot at a certain position based on the contone image and errors produced in the rendering of neighboring dots.

A more common approach to creating digital halftones uses a threshold mask to simulate the classical optical approach. This mask is an array of thresholds that spatially correspond to the addressable points on the output medium. At each location, an input value from the contone image is compared to a threshold to make the decision whether to print a dot or not. A small mask (tile) can be used on a large image by applying it periodically.

In the simplest case, classical screens produce halftone dots that are arranged along parallel lines in two directions, *i.e.* at the vertices of a parallelogram tiling in the plane of the image. If the two directions are orthogonal, the screen can be specified by a single angle and frequency.

How the thresholds are arranged in the mask is very important to minimizing the ability of the observer to perceive the halftoning. Generally, there are two strategies for increasing the colorant coverage as the tone darkens: amplitude modulation (AM) and frequency modulation (FM). In AM screening, the halftone dots grow according to a spot function as the desired coverage increases. In contrast, the number of dots increases as the desired coverage increases in FM screening.

Agfa Balanced Screening (ABS), see U.S. Pat. No. 5,155,599 allows the use of a square tile to produce screens closely approximating any angle or reasonable frequency. ABS is an example of a supercell technique: the threshold array (tile) contains many halftone cells. The ABS parameters determine the number of halftone dots contained within a tile and their centers. The dot centers do not necessarily lie on the underlying printer grid, but may be "virtual". When the threshold mask is being computed, the halftone dots are created out of real device pixel locations that grow around these virtual centers. Furthermore, to allow for more levels of coverage, the dot growth is dithered. This means that the halftone dots do not grow synchronously, but in a pre-determined order within the tile.

The screens, however, must also be designed in view of the idiosyncrasies of the target printing process. In applications such as electrophotographic printing, the actual toner transfer at a pixel to the page is a nonlinear process and depends strongly on the neighboring pixels. In particular, if a pixel is printed in isolation, it is common that no toner would be transferred. Furthermore, there can be dependencies on ambient conditions, such as humidity and temperature. In short, the amount of toner transferred can be highly variable and thereby lead to an unpleasing graininess in the printed image.

U.S. Pat. No. 5,766,807 to Delabastita, addresses the problem of the non-linear transfer at isolated pixels. A frequency modulation approach is used in the highlights. Each halftone dot is grown to its smallest stable size before proceeding to the next dot. As the tone is darkened, more and more of these stable clusters are placed in an FM process. Thereafter, once stable clusters have been placed at each halftone dot location, the clusters are grown in an AM process as tone is darkened further. U.S. Pat. Appl. 10/007,440 to Crounse, filed on December 4, 2001, published as US 2003/107768 A1 concerns a further refinement relating the dither pattern used to lay down the stable clusters.

The use of FM in the highlights is a powerful approach. However, even if the dither pattern is well dispersed, it can be visually distracting. This is especially true at tone levels where almost all of the FM halftone dots have been placed on the regular lattice - the remaining gaps in the lattice can appear as "white holes" that are scattered and thus have a low spatial frequency. An observer can, under some conditions, detect these white holes.

### SUMMARY OF THE INVENTION

The above-mentioned problems are solved by a threshold mask having the specific features set out in claim 1 and a method according to claim 6. Specific features for preferred embodiments of the invention are set out in the dependent claims.

The present invention addresses the problem of visible FM dither patterns by using a mixture of FM and AM screening techniques over some range of tone levels. Such a method can reduce FM dither pattern visibility, while preserving the stability properties of the FM approach.

The description of the invention is given for highlight dots, *e.g.* black dots on a white background, but applies equally to shadow regions, *e.g.* white background dots against a black background or other colors in the printing system's palette.

In the FM regime, two types of visual disturbances can arise. The "FM regime" is the range of tones for which some form of FM screening is being used, and applies to all tones lighter than the one in which all halftone dot centers have, at minimum, achieved the stable halftone dot. In this regime, disturbances can arise due to:
1) variations in printed halftone dots smaller than the minimum stable size; and
2) unpleasant patterns produced by the dithered stable dots. The present invention allows for the creation of a screen with the best trade-off between these disturbances at tone levels in the FM regime.

In the simplest implementation, FM screening is used up to a tone level where the FM dither pattern holes begin to become visible. At this point AM screening is applied only to the remaining dot centers (corresponding to those holes) preferably until they reach the stable dot size. Then, all of the dots are further grown according to the method used outside of the FM regime (*e.g.* the conventional AM process).

In general, according to one aspect, the invention features a threshold mask for converting a contone image to a halftone image. This threshold mask comprises halftone cells that define halftone dots that undergo a growth in population as tone levels increase, *i.e*., darken. At some point during the growth in population, the halftone dots having a second predetermined size are placed into halftone gaps. The second predetermined size is smaller than the first predetermined size. In this way, halftone gaps that are typically formed at intermediate levels of tone are filled in, according to the present invention, with smaller halftone dots before the gaps would become apparent to the observer.

Since these halftone dots are small, overall tone is not substantially impacted. Even so, to avoid a tone jump, they are preferably introduced one at a time according to a dither pattern. Moreover, they are preferably smaller than the minimum stable size for the printing system and so their size may be somewhat uncontrolled. This, however, does not materially affect the tone rendition quality, and can actually improve the overall print quality by avoiding the appearance of the halftone gaps.

In the preferred embodiment, the halftone dots grow in frequency according to a dither pattern. They also grow in size according to a dither pattern as is done in other systems.

In the preferred embodiment, the first predetermined size is based on a minimum stable dot size for the printing system utilizing the threshold mask. In fact, in the preferred embodiment, the first predetermined size is set at the minimum stable dot size for the printing system.

Further, according to the preferred embodiment, the second predetermined size of the halftone dots is also based on the minimum stable dot size for the printing system. Preferably, in the preferred embodiment, the second predetermined size is less than the minimum stable dot size. In fact, the second minimum size is usually set to the smallest addressable quantity available on the device.

After the halftone dots of the second predetermined size are placed, two discrete types of populations exist typically, corresponding to:
1) the population that was created by placement of FM dots or type 1 dots, and
2) the population that was placed in the holes or type 2 dots. In the preferred embodiment, tone is increased or darkened by increasing the population of halftone dots of the first type (FM) or by further growth in the size of either of the halftone dots populations (AM). In one implementation, the further growth in size is applied to the dots of the second type. In another embodiment, it is alternately applied to the dots of the second type or dots of the first type or dots of both the first and second types synchronously. When the FM method is applied, dots of the second type become dots of the first type according to the chosen dither pattern. These dots are placed at the current size of the dots of the first type. Once all dots have either become dots of the first type or all dots have become the same size, the dots are grown according to other methods (*e.g.*, in accordance with a spot function).

In general, according to another aspect, the invention also features a method for converting a contone image into a halftone image using a threshold mask. This method relates to a threshold mask with the property that, when applied to inputs representing increasing tone levels, an increasing first population of halftone dots having a first predetermined size is produced. Then, as input tone levels are further increased, the size of the halftone dots produced in the first population can be grown (AM) or the number of dots can be increased (FM). A second population of halftone dots is also produced, however. The dots in this population are smaller in size than the first predetermined size and are placed into halftone pattern gaps formed between the halftone dots of the first population. As input tone is further increased, dots produced in the second population can be increased in size.

In general, according to another aspect, the invention also features a method for converting a contone image into a halftone image using a look-up-table (LUT) that stores the halftone patterns that should be reproduced for each input level. Such patterns can be produced by applying a threshold mask of the type described above to a series of all possible constant input images of the same size as the threshold mask. However, the invention only requires that the look-up table have the following properties:
1) the LUT contains halftone patterns in the highlights (alternatively, shadows) that contain two distinct populations of halftone dots, one dot size is larger than the other;
2) patterns stored in successive LUT entries are varied by changing one or more of the following: the number of dots in the first population, the size of the dots in the first population, the size of the dots in the second population;
3) patterns stored in successive LUT entries produce a darkening effect on the output device.

Note that the changes to dot size and populations may be a decrease, an increase, or no change, as long as the overall effect is to increase the tone.

In general, according to still another aspect, the invention features a method for defining a threshold mask. This threshold mask is used for converting a contone image into a halftone image in which halftone dots grow in population and grow in size as tone levels increase, *i.e.*, darken. The method comprises generating a first screen in which halftone dots grow in size as tone levels increase. A first test image is then printed. This first test image has an input tone gradation. It is printed on a target printing system. Then, by inspection, a first tone level is determined at the point at which the tone becomes mottled. This tone corresponds to the minimum stable dot size for the printing system. Alternatively, the stable dot size can be determined by inspecting the gradation under a microscope or by using a print quality system. The first predetermined size is assigned based upon this first tone level. A second screen is then printed comprising halftone dots of the first predetermined size added according to a chosen dither pattern. This also has a tone input gradation. A second tone level of the input gradation is then determined. It is based upon when halftone gaps are first apparent or the number of dots in the dither pattern when it first becomes unpleasant. A tone level at which to provide halftone dots of the second predetermined size is determined in response to this second tone level.

The invention has particular applicability to devices that have the ability to print more than one tone at each pixel. For example, in some electrophotographic or inkjet devices, multiple levels are produced by modulating the optical signal or ink drop size. Threshold arrays that produce multi-level AM halftones can be made for these applications. Such screens will begin growing a halftone dot starting with the lightest available level, then gradually darkening and expanding it. The overall positive effect is that of a bi-level dot that has been smoothed or made fuzzy around the edges (*i.e.* "anti-aliased") so that it is not so visible. However, the lightest addressable level of the system will in many cases not print reliably in isolation. Therefore, the FM approach is used in the highlights, leading to the previous discussed unpleasant patterns, which this invention addresses.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:
Fig. 1 is a schematic diagram of a rational tangent supercell to which the present invention is applicable in one embodiment;
Fig. 2 illustrates the tiling of the supercells to define a continuous halftone screen;
Fig. 3 is a flow diagram illustrating the process for increasing tone levels in a halftone image according to the present invention;
Fig. 4 is a block diagram showing a system for rendering an image on media from a contone image data, according to the present invention;
Figs. 5A-5F illustrate the process for increasing tone levels according to embodiments of the present invention; and
Fig. 6 is a flow diagram illustrating a process for defining a threshold mask for converting a contone image into a halftone image according to the present invention.

### DETAILED DESCRIPTION OF THE INVENTION

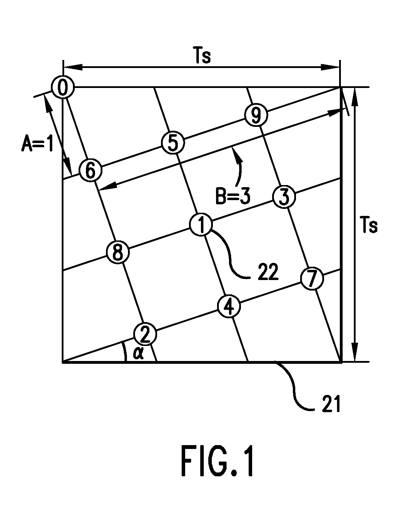

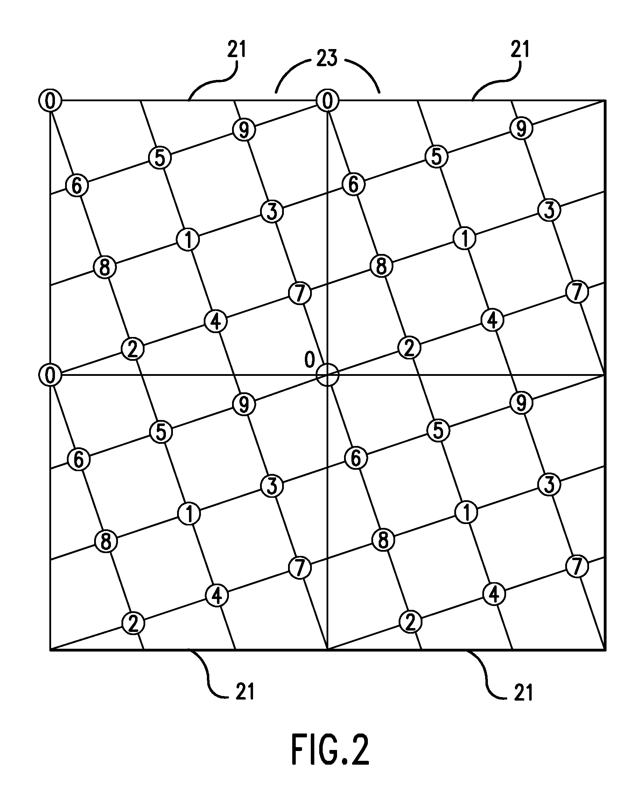

Figs. 1 and 2 are provided by way of background to describe the relationship between the supercells or tiles and the halftone cells that give rise to the halftone dots.

Fig. 1 shows a rational tangent supercell or tile 21, such as described in U.S. Pat. No. 5,155,599 or 5,766,807. The supercell or tile 21 is characterized by a tilesize TS, indicating the linear size of the tile expressed in number of microdots (generally, pixels), and two integer values A and B, defining the geometry of the halftone screen.

The angle α of the screen is given by the arctangent of A/B. The centers of the halftone dots 22 are represented by circles in the drawing. The total number of possible halftone dots or halftone cells 22 in the supercell 21 is designated by the name "number_of_dots", and is given by the value of A² +B². This corresponds to the number of halftone cells within the tile 21.

The total number of microdots or pixels contained in a supercell is designated by "number_of_rels" and is equal to TS*TS.

The values A=1 and B=3 were selected for the example. The tile 21 thus has a size of ten halftone dots. If we let the tile size equal 20 (TS=20), then the tile contains number_of_rels=400 microdots. Each microdot within the supercell requires one threshold value in the threshold matrix. As such, 400 threshold values must be generated to thereby control how the halftone dots grow in frequency and grow in size as tone levels change, such as increase.

Fig. 2 demonstrates how a complete and contiguous halftone screen 23 may be obtained by replicating the rational tangent supercell 21 horizontally and vertically.

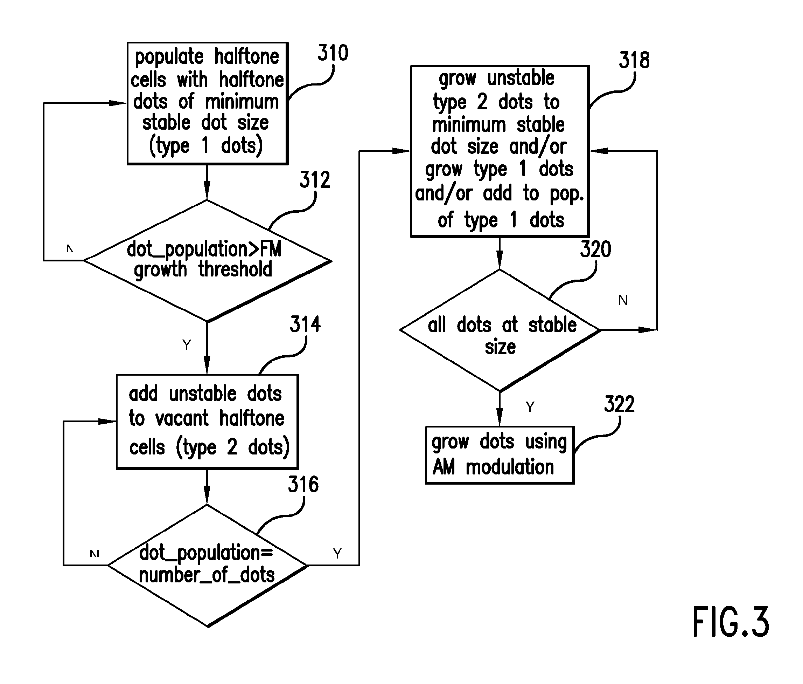

Fig. 3 shows the process for increasing tone by controlling how the halftone dots 22 of the screen 23 are laid down and then how they grow in size by defining how the thresholds of the underlying microdots are defined, according to the present invention.

It should be noted that embodiments of the invention are described by way of example in the case of how tone is increased or darkened. The invention, however, applies to the generation of any arbitrary tone as required in the reproduction of an image and how the halftone image is generated to minimize the ability of the viewer to detect the halftoning process.

In more detail, in step 310, the halftone cells 22 are populated with halftone dots of a minimum stable size. Generally, in a typical printing system, a minimum stable size corresponds to approximately three adjacent pixels. As tone levels increase, halftone dots of the minimum stable dot size are successively placed at the dot centers for the corresponding halftone cells 22.

As is known, the population is increased in a dither pattern among the halftone cells 22 in the tile 21 to decrease the viewer's ability to detect the halftoning process.

Step 310 is repeated until it is determined in step 312 that the population of halftone dots is greater than an FM growth threshold. The variable dot_population holds the value corresponding to the number of halftone dots that are placed in the threshold mask according to the present tone level. FM_growth threshold is less than the number_of_dots constant, corresponding to the total number of halftone cells or halftone dots 22 in the tile 21.

When the FM_growth threshold is exceeded in step 312, halftone dots are placed in vacant halftone cells 22 (314). According to the invention, these halftone dots are sized to be smaller than the halftone dots that were placed in step 310. Preferably, they are smaller than the minimum stable halftone dot size for the printing device. For example, in one implementation, they are less than 3 pixels or microdots in size.

The process of setting down unstable halftone dots in step 314 is typically done to fill in any halftone gaps that would be apparent to the viewer. In the present embodiment, the unstable halftone dots continue to be placed until the population of halftone dots is equal to the number of dots corresponding to the total number of halftone cells in the threshold mask. In other embodiments, the unstable dots are only placed to a level required to decrease the ability of the viewer to detect the halftone gaps.

Next, in step 318, a combination of FM and/or AM modulation can be performed to further increase the tone levels. Specifically, the population of the type 1 halftone dots of the first population is increased in one example to increase tone levels. This occurs by converting type 2 second population dots to first population dots. The first population type 1 dots are alternatively grown in size as tone levels increase. In still another case, the type 2 halftone dots of the second population, which are typically less than the minimum stable dot size, can be grown as tone levels increase, to a stable size, for example.

This combination of AM and FM modulation is performed until it is determined that all dots are at a predetermined size, typically equal to or larger than the minimum stable size in step 320. Thereafter, in step 322, all dots are then grown according to an AM modulation, *i.e*., grown in size.

For example, in one advanced implementation, the determination to add pixels to the halftone pattern according to an AM or an FM approach can be made incrementally (with the addition of every new pixel) or periodically. That is, the choice of which type of growth to perform to increase tone can happen according to a pre-defined sequence.

For further discussion, let us consider the case where the type 1 dots are chosen to be the smallest stable dot size, and do not grow any further in size. Let the screen tile contain ***N*** halftone dots. Then there are **0 ≤ *p* ≤ *N*** dither patterns. Let ***q***_{*FM*} be the number of pixels (or total number of levels) in the chosen stable FM cluster.

Then the AM cluster size in the FM regime is must be in the range **0≤*q*≤*q***_{***FM***}.

Then, for increasing inputs in the FM regime, we must start with ***q =* 0** and ***p*=0** and arrive at either ***p = N*** or ***q = q***_{***FM***} at the end of the FM regime. Between such endpoints there are a large number of possible paths whereby both the type 1 dot population is increased and/or the remaining type 2 AM dot sizes are increased. The only constraint is that the tone must be increased or darkened with each step. (When using a look-up table (LUT) implementation, it is possible that in some cases that one of the parameters can be increased and the other decreased while still meeting this condition.) Since there are many options, the path that is least visually disturbing can be chosen.

Choosing this path can be done by inspection. For example test sheet(s) for which patterns corresponding to increasing ***q*** along one axis and increasing ***p*** along the other can be printed and examined. In another implementation, a mathematical model of the printing process and the human visual system can be used to predict the visual cost of various patterns and the path can be determined automatically.

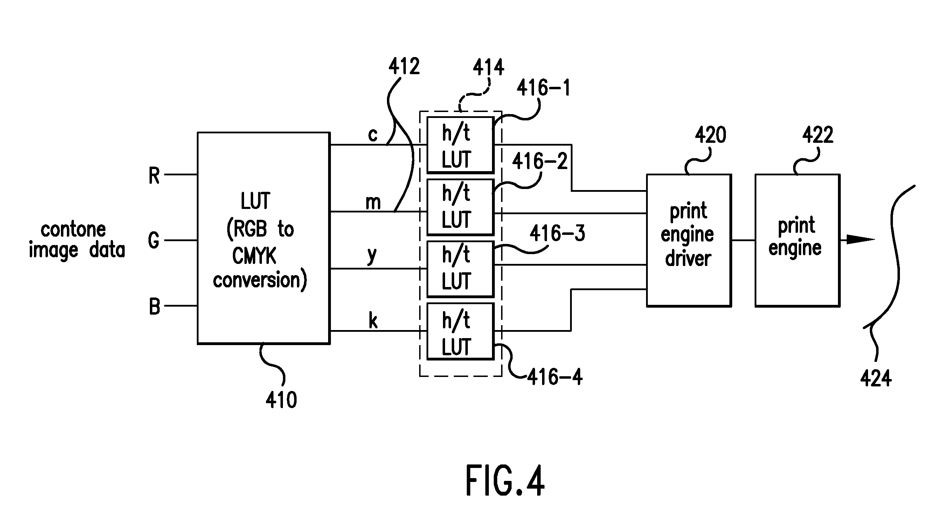

Fig. 4 shows a LUT-based halftone rendering system, which has been constructed according to the principles of the present invention. Specifically, it comprises a color space converter 410. The color space converter 410 generates target device contone image data from input contone image data.

In one implementation, the color space converter 410 is similar to conventional converters. Specifically, it receives red, green, and blue contone image data. The converter 410 includes a look-up table that maps red, green, and blue levels to cyan, magenta, yellow, and black levels. As a result, the target device contone image data are produced in the color space, CMYK, of the target printing device. The various color channels, collectively reference numeral 412, are received at a halftoning stage 414. This halftoning stage converts the target device contone image data into target device halftone image data.

The halftoning stage 414 comprises a set of LUTs, one LUT 416-1 to 416-4 for each color channel. Each of the LUTs 416-1 to 416-4 stores the halftone patterns corresponding to each possible input level for each color channel. The input to the LUT is the contone value for that channel and the spatial position. The output of the LUT is the halftone value to be printed.

In one implementation, the stored patterns are produced by applying a threshold mask to all possible input images of the same size as the threshold mask. When the LUTs contents are derived from, or strictly equivalent to, a mask, the LUT satisfies the "stacking constraint" -- *i.e.*, when going from light to dark, once a pixel or microdot has been turned on, it remains on.

More generally, the look-up tables 416-1 to 416-4 can be loaded such that halftones, that cannot be formed by a mask, can be made. In this case the table data have the following properties:
1) the LUT contains halftone patterns in the highlights (alternatively, shadows) that contain two distinct populations of halftone dots, one dot size is larger than the other;
2) patterns stored in successive LUT entries are varied by changing one or more of the following: the number of dots in the first population, the size of the dots in the first population, the size of the dots in the second population;
3) patterns stored in successive LUT entries produce a darkening effect on the output device.

Note that the changes to dot size and populations may be a decrease, an increase, or no change, as long as the overall effect is to increase the tone. The dots in this population are smaller in size than the first predetermined size and are placed into halftone pattern gaps formed between the halftone dots of the first population. As input tone is further increased, dots produced in the second population increase in size.

Print engine driver 420 converts the target device halftone image data directly into commands to the print engine 422. In the present embodiment, the print engine is laser printer that deposits toner onto media 424 or an ink jet print head that sprays ink droplets onto media 424, such as paper.

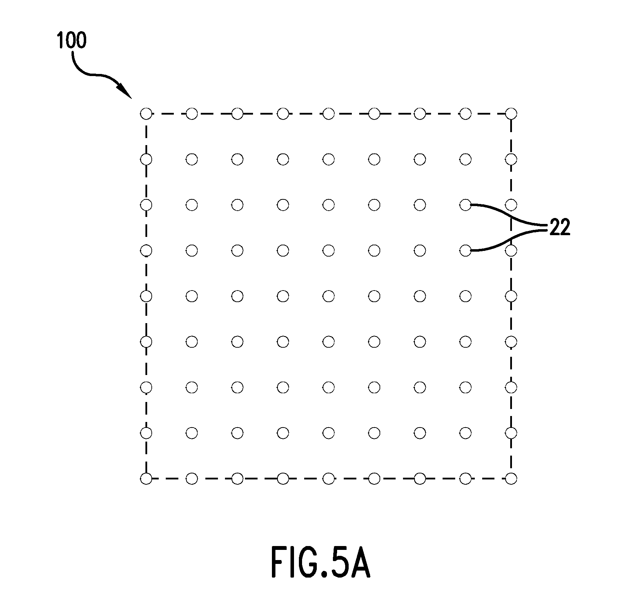

Fig. 5A is an example of a halftone print image 100 showing the halftone dot centers or the halftone cells 22. The print image 100 is shown at a zero tone level. No halftone dots have been placed.

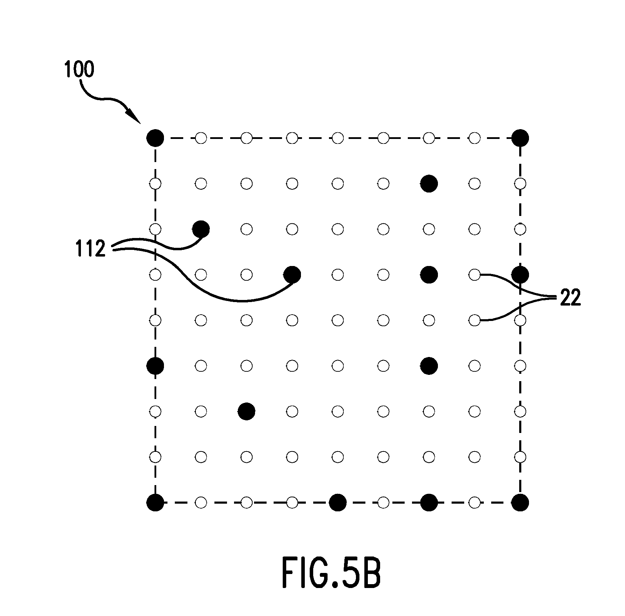

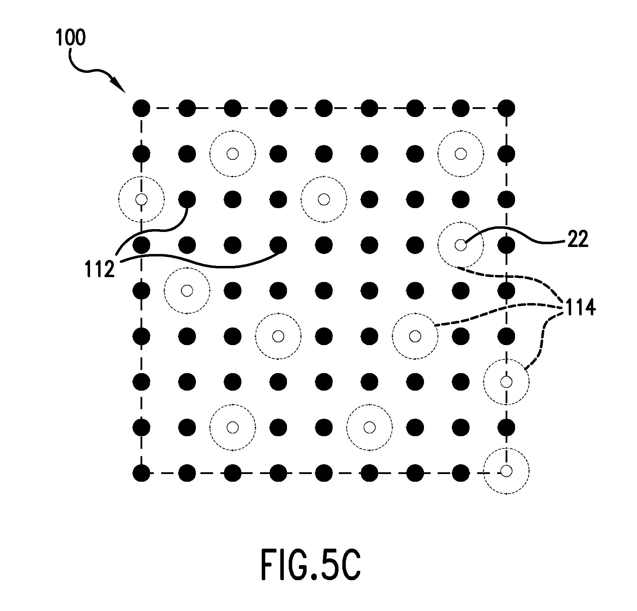

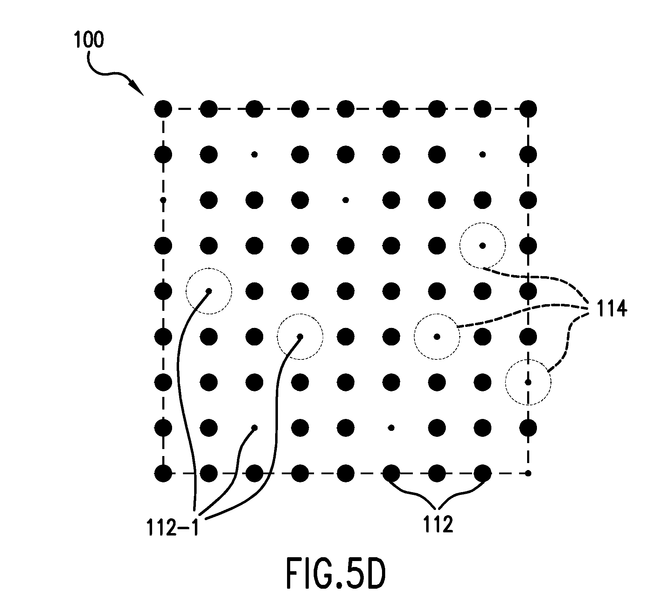

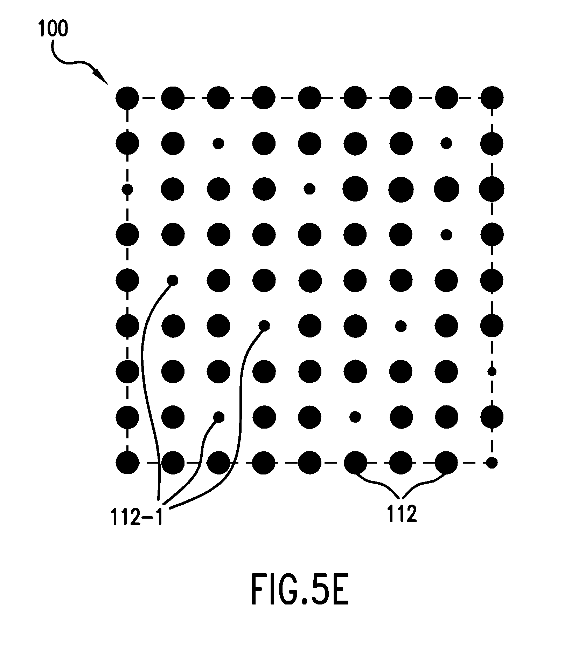

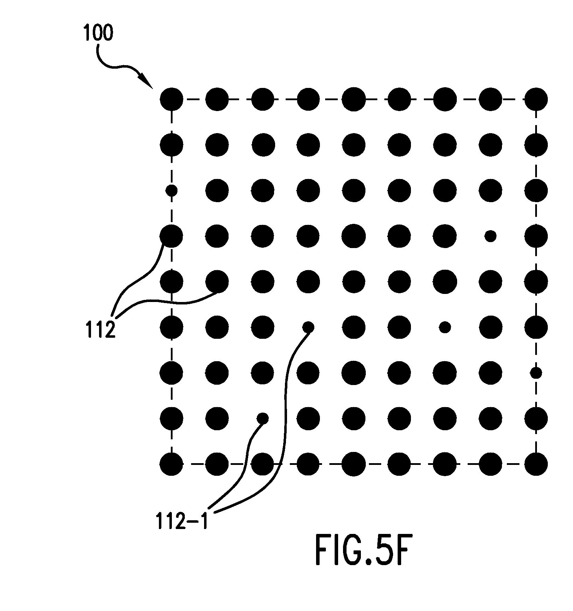

Fig. 5B shows the region of the print image at a slightly higher level of tone. Type 1 halftone dots 112 have been placed within the image in a dither pattern to increase the level of tone in the threshold mask.

Fig. 5C shows the print image 100 at a still higher level of tone. Here, type 1 halftone dots 112 have been placed throughout the print image to further increase the tone. The dots, however, are relatively small, preferably corresponding to the minimum stable dot size for the print system. Some of the halftone cells such as halftone cells 22 do not have halftone dots. The vacant cells can result in halftone gaps in regions 114 generally surrounding these vacant halftone cells.

As illustrated in Fig. 5D, as tone levels are increased further, halftone dots 112-1 are placed in these halftone gaps 114 to decrease the ability of the viewer to perceive these halftone gaps. Specifically, the type 2 halftone dots 112-1 are placed in the halftone gaps. These halftone dots are typically smaller than the type 1 halftone dots 112. In one embodiment, they are less than a minimum stable size for the printing system. As a result, they cannot be put down by the printing system with a high degree of consistency. This, however, does not represent a problem because it does not impact the ability of the printing system to accurately render the proper tone. In contrast, it does minimize the ability of the viewer to detect the halftone gaps 114.

As illustrated in Fig. 5E, two different populations of halftone dots are present once the threshold mask has been fully populated with halftone dots. These halftone dots correspond to the first population type 1 dots 112, which are at the stable size and larger, and the second population type 2 dots 112-1 which start at an unstable size and then are grown to increase tone levels. The two populations, as illustrated in Fig. 5E, can be grown at different rates and separately to minimize the ability of the viewer to detect any gaps in the image or other mottling effects.

As illustrated in Fig. 5F, in some implementations, the type 1 dots undergo FM growth in which type 2 dots are converted to type 1 dots to thereby increase the population of type I dots.

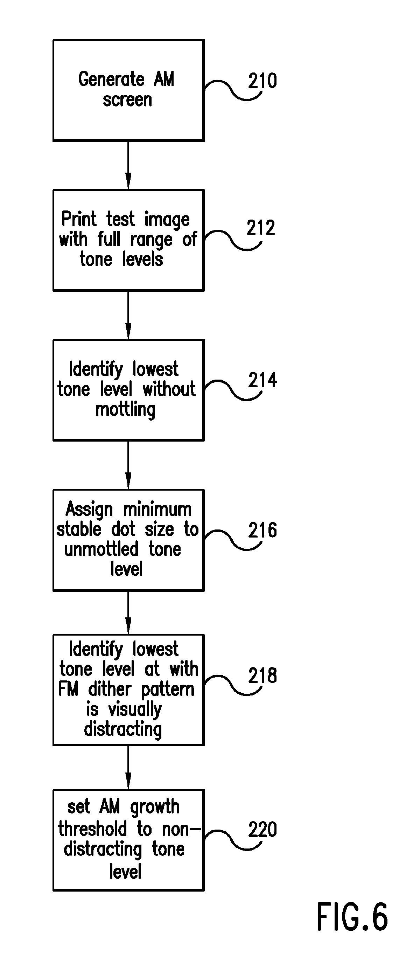

Fig. 6 shows a process performed by the threshold mask designer to define a threshold mask according to the present invention.

Specifically, in step 210, the designer develops an AM screen in step 210. In this AM screen, halftone dots increase in size as tone levels increase.

A first test image is then printed in step 212. It corresponds to the full range of tone levels, typically with a linearly increasing tone level across the image.

The resulting test image is analyzed in step 214. The designer identifies the lowest tone level that yields no mottling. This tone level provides the minimum stable dot size for the printing system. Next, in step 216, the minimum stable dot size is assigned based on this unmottled tone level.

Next, a second test image is printed with a full tone level range using an FM dither pattern. It is printed using the minimum stable dot size, in step 218. This step enables the designer to determine when the dot frequency at the minimum stable dot size is such that distracting halftone gaps appear. When this is determined, the FM growth threshold is set to the lowest level at which there is no distracting halftone gaps in step 220. This ensures that the threshold mask begins to fill in the halftone gaps before they become apparent to the viewer.

While this invention has been particularly shown and described with references to preferred embodiments thereof, it will be understood by those skilled in the art that various changes in form and details may be made therein without departing from the scope of the invention encompassed by the appended claims.

## Claims

1. A threshold mask for converting a contone image into a halftone image, the threshold mask comprising:
- halftone cells that define halftone dots that undergo a growth in population, *preferably according to a dither pattern for the halftone cells as tone levels increase* and then undergo a growth in size, *preferably according to a dither pattern for the halftone cells from a first predetermined size, preferably based on a minimum stable dot size for a printing system utilizing the threshold mask,* as tone levels increase further;
- wherein during the growth in population, halftone dots having a second predetermined size, *preferably based on said minimum stable dot size, which is smaller that the first predetermined size,* are placed into gaps in the halftone pattern.

2. The threshold mask as claimed in claim 1, wherein the halftone dots begin to grow in size before a number of halftone dots is equal to a number_of_dots constant corresponding to the number of halftone cells in the threshold mask.

3. A threshold mask according to any one of the previous claims, wherein the first predetermined size of the halftone dots is equal to or larger than a minimum stable dot size for a printing system utilizing the threshold mask and preferably the second predetermined size of the halftone dots is less than said minimum stable dot size.

4. The threshold mask according to any one of the previous claims, wherein when the halftone dots of the second predetermined size are placed, tone is increased by undergoing further growth in population and further growth in size, preferably applied to the halftone dots of the first or second predetermined size.

5. A method for converting a contone image into a halftone image using the threshold mask according to any one of the previous claims.

6. A method for converting a contone image into a halftone image comprising the steps of:
- increasing tone levels by growing a first population of halftone dots having a first predetermined size;
- increasing tone levels further by growing a size of the halftone dots in the first population; and
- introducing a second population of halftone dots of a second predetermined size, which is smaller that the first predetermined size, into halftone gaps formed between halftone dots of the first population.

7. A method for defining the threshold mask according to any one of the previous claims 1 to 4 for converting a contone image into a halftone image in which halftone dots grow in population and grow in size as tone levels increase, the method comprising:
- generating a first screen in which halftone dots grow in size as tone levels increase;
- printing a first test image having an input tone gradation on a printing system;
- determining a first tone level of the input tone gradation at which a tone becomes mottled;
- assigning a first predetermined size based on the determined tone level of the input gradation;
- generating a second screen comprising halftone dots of the first predetermined size;
- printing a second test image having a tone input gradation on the printing system;
- determining a second tone level of the input tone gradation at which halftone gaps are apparent;
- assigning a tone level at which to provide halftone dots of a second predetermined size in response to the second tone level.

8. The method as claimed in claim 7, wherein the step of printing the first test image comprises printing a full-range input tone gradation and preferably the step of determining the first tone level at which the tone becomes mottled comprises inspecting the first test image with a microscope or a print quality testing system.

9. A system for rendering an image at a target device from a contone image, the system comprising:
- a color space converter for generating target device contone image data from input contone image data;
- a halftoning stage for converting the target device contone image data into target device halftone image data, by using the threshold matrix according to any one of claims 1 to 4; and - a print engine for depositing colorant on media in response to the target device halftone image data.
